# DEMANDE DE BREVET EUROPEEN

(11) **EP 0 687 586 A1**
(43) Date de publication de la demande: **20.12.1995**
(21) Numéro de dépôt: 95401365.2
(22) Date de dépôt: 13.06.1995
(51) Int. Cl.: B60J 10/08

(54) **Dispositif d'étanchéité perfectionné à élément tubulaire, en particulier pour véhicule automobile, et son procédé de fabrication**

(30) Priorité: 17.06.1994 FR 9407451
(71) Demandeur: HUTCHINSON, F-75384 Paris Cédex 08 (FR)
(72) Inventeur: Guillon, Henri, F-45700 Villemandeur (FR)
(74) Mandataire: Doireau, Marc

(57) **Abrégé**

Le dispositif d'étanchéité (1) comporte un élément de fixation (2) au bâti ou à la caisse d'un véhicule automobile et un élément tubulaire élastiquement déformable (5) avec lequel est propre à coopérer une partie mobile du véhicule, comme une porte, un capot de moteur ou de coffre, ou analogue. L'élément tubulaire (5) comprend une enveloppe (12), dont le volume intérieur est au moins partiellement rempli, et avantageusement totalement rempli, d'un matériau cellulaire (13) de très faible densité et ayant une très bonne rémanence, pour améliorer l'isolation phonique et les prises de rayon.

## Description

La présente invention concerne un dispositif d'étanchéité comprenant un élément de fixation au bâti ou à la caisse d'un véhicule automobile et un élément tubulaire élastiquement déformable avec lequel est propre à coopérer une partie mobile du véhicule, comme une porte, un capot de moteur ou de coffre, ou analogue, ainsi que son procédé de fabrication.

D'une manière générale, l'élément tubulaire du dispositif d'étanchéité est essentiellement destiné à procurer l'étanchéité requise à l'eau d'une part, et contribuer à l'isolation phonique d'autre part. Cet élément tubulaire doit également épouser les formes de son support en respectant diverses exigences fonctionnelles telles que l'aspect esthétique, l'accostage, etc..., lesquelles ne sont pas toujours remplies, notamment lorsque des déformations locales sont imposées à l'élément tubulaire, ce qui provoque généralement l'apparition de plis, d'ondulations, de frisures superficielles, etc....

Ces inconvénients qui peuvent compromettre l'étanchéité et la facilité de fermeture d'une porte par exemple, sont également gênants pour des applications où l'élément tubulaire est garni d'un revêtement textile comme du velours, un aspect irrégulier de ce dernier étant inacceptable pour des véhicules de prix élevé qu'ils équipent et où ils sont mis en oeuvre précisément pour donner un aspect de qualité exceptionnel.

Le but de l'invention est d'améliorer notamment la prise de rayon et l'isolation phonique de ces dispositifs d'étanchéité pour augmenter le confort à l'intérieur du véhicule, tout en évitant toute déformation de l'élément tubulaire du dispositif d'étanchéité susceptible de nuire à l'aspect esthétique du dispositif.

A cet effet, l'invention propose un dispositif d'étanchéité du type précité et qui est caractérisé en ce que l'élément tubulaire comprend une enveloppe, dont le volume intérieur est au moins partiellement rempli d'un matériau ou produit cellulaire de faible densité et ayant une bonne rémanence.

Selon un mode de réalisation préférentiel de l'invention, le volume intérieur de l'enveloppe de l'élément tubulaire est complètement rempli dudit matériau cellulaire.

D'une manière générale, le matériau cellulaire est du polyuréthane, par exemple, et l'enveloppe de l'élément tubulaire est de relativement faible épaisseur et constituée en un matériau compact, tel que du caoutchouc, ou en un matériau souple, tel que du caoutchouc cellulaire.

L'invention a également pour objet un procédé de fabrication du dispositif d'étanchéité, selon lequel l'enveloppe tubulaire de ce dispositif est fabriquée par extrusion, ce procédé étant caractérisé en ce qu'il consiste à injecter le matériau cellulaire à l'intérieur de l'enveloppe de l'élément tubulaire au cours de l'extrusion de ce dernier.

Ainsi, le matériau cellulaire, une fois injecté à l'intérieur de l'enveloppe de l'élément tubulaire du dispositif d'étanchéité, s'expanse et remplit au moins en partie, et de préférence totalement, le volume intérieur de l'enveloppe au cours de l'extrusion de cette dernière.

Ce procédé présente l'avantage d'être simple à mettre en oeuvre, et il est particulièrement adapté pour réaliser des éléments tubulaires de section circulaire ou ovale.

Selon une variante, le procédé de fabrication du dispositif selon l'invention est caractérisé en ce qu'il consiste à enrober une tresse textile d'un matériau cellulaire, à tirer cette tresse textile au travers d'un conduit de forme conique pour permettre au matériau cellulaire de s'expanser, et à extruder l'enveloppe de l'élément tubulaire du dispositif d'étanchéité autour du matériau cellulaire expansé à la sortie du conduit.

Selon une autre caractéristique de cette variante du procédé, l'expansion du matériau cellulaire déposé sur la tresse textile et l'extrusion de l'enveloppe autour du matériau cellulaire expansé, sont deux opérations qui sont réalisées en continu, la tresse textile étant tirée de manière à traverser le conduit qui permet l'expansion du matériau cellulaire, puis la filière d'extrusion du matériau, tel du caoutchouc, destiné à enrober le matériau expansé pour former l'enveloppe élastiquement déformable du dispositif d'étanchéité.

Avec cette variante du procédé, il est possible d'obtenir des formes plus complexes que celles obtenues par le procédé précité qui consiste à injecter le matériau cellulaire à l'intérieur de l'enveloppe en cours d'extrusion.

Selon un avantage important de l'invention, un dispositif d'étanchéité avec un élément tubulaire plein permet de résoudre à la fois les problèmes de prise de rayon et d'acoustique, dès l'instant où le matériau cellulaire utilisé est de faible densité et a une bonne rémanence, de manière à ce que l'élément tubulaire retrouve quasi-instantanément sa forme après une mise en compression ou après une déformation.

D'autres avantages, caractéristiques et détails de l'invention ressortiront de la description explicative qui va suivre, faite en référence aux dessins annexés, dans lesquels :

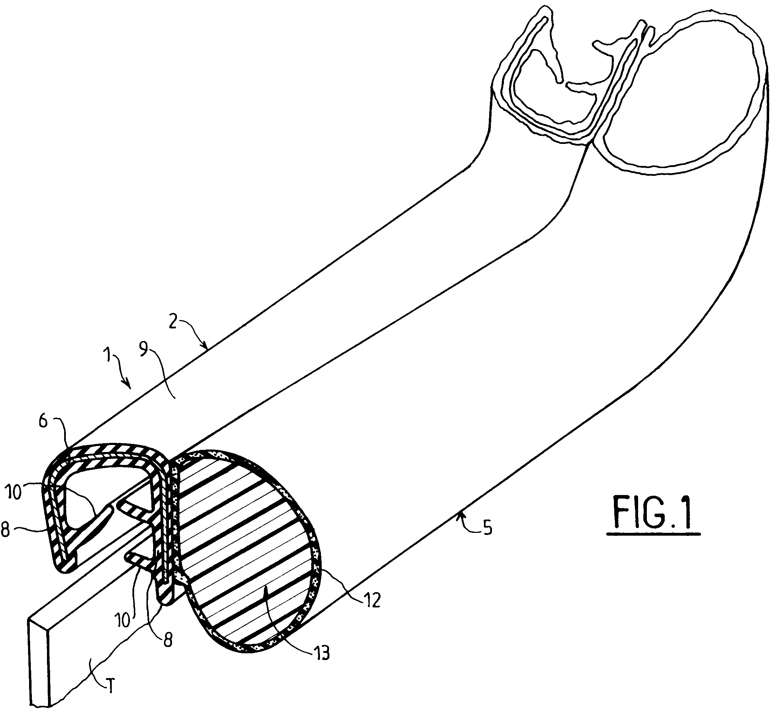

- la figure 1 est une vue en perspective du dispositif d'étanchéité selon l'invention,
- la figure 2 est une vue schématique d'un système pour illustrer une première mise en oeuvre du procédé de fabrication de l'élément tubulaire du dispositif d'étanchéité, et
- la figure 3 est une vue schématique d'un système pour illustrer une variante de mise en oeuvre du procédé de fabrication de l'élément tubulaire du dispositif d'étanchéité selon l'invention.

Un dispositif d'étanchéité 1 selon l'invention comprend un élément de fixation 2 formant pince à section droite en Π, qui se fixe sur la tôle T du bâti ou de la caisse d'un véhicule automobile, et un élément d'étanchéité tubulaire 5 élastiquement déformable.

L'élément de fixation 2, d'une façon connue en soit, comporte par exemple une armature 6 noyée dans une matrice en matériau élastomère ou plastomère ménageant des ailes latérales 8 et un dos 9.

Cet élément de fixation 2 comporte également, sur ses faces internes, des lèvres 10 destinées au maintien du dispositif d'étanchéité 1 sur la tôle T. Ces lèvres 10 sont en le même matériau ou en un matériau différent de celui formant la matrice de l'élément de fixation 2.

L'élément tubulaire 5 est destiné à assurer l'étanchéité entre le bâti et une partie mobile du véhicule, telle qu'une porte par exemple, ainsi que l'isolation phonique entre l'intérieur du véhicule et l'extérieur. Cet élément tubulaire 5 est constitué d'une enveloppe 12 dont le volume intérieur est au moins partiellement rempli, et de préférence totalement rempli, d'un matériau cellulaire 13 tel que du polyuréthane et, d'une manière générale, tout matériau alvéolaire de très faible densité et ayant une très bonne rémanence.

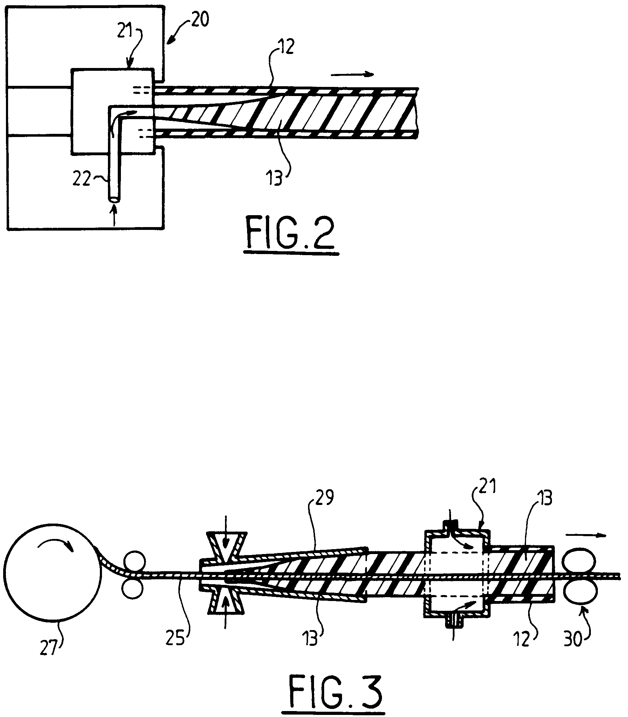

On va décrire maintenant un procédé de fabrication de l'élément tubulaire 5 en liaison avec la figure 2 qui illustre de manière schématique un système de mise en oeuvre de ce procédé.

D'une manière générale, lorsque l'on extrude un matériau tel du caoutchouc pour obtenir une enveloppe tubulaire, de l'air est envoyé à l'intérieur de l'enveloppe en cours d'extrusion pour éviter le phénomène connu de succion. En effet, au cours de l'extrusion, il se forme un léger vide à l'intérieur de l'enveloppe si bien que sous l'effet de son propre poids l'enveloppe tend à se déformer par aplatissement.

Selon le procédé selon l'invention, l'air précédemment injecté à l'intérieur de l'enveloppe au cours de son extrusion, est avantageusement remplacé par le produit cellulaire destiné à remplir cette enveloppe.

Pour mettre en oeuvre un tel procédé, on utilise une tête d'extrusion classique 20 avec une filière 21 au travers de laquelle passe un matériau extrudable, tel du caoutchouc, destiné à former l'enveloppe 12 de l'élément tubulaire 5. Le profil de la filière 21 est défini en fonction de la forme et des dimensions de l'enveloppe 12 que l'on désire obtenir. Dans la partie centrale de cette filière 21, un conduit 22 généralement utilisé pour injecter de l'air dans l'enveloppe 12 en cours d'extrusion, est utilisé pour injecter le matériau cellulaire 13 dans cette enveloppe 12. Le matériau cellulaire 13 injecté s'expanse et remplit progressivement le volume intérieur de l'enveloppe 12 avant vulcanisation de l'ensemble.

Selon une variante, le procédé consiste à séparer l'opération d'expansion du matériau cellulaire 13 de celle de l'extrusion de l'enveloppe 12 de l'élément tubulaire 5, ces deux opérations étant en fait réalisées l'une après l'autre mais en continu.

La figure 3 illustre schématiquement les moyens de mise en oeuvre de cette variante du procédé.

Une tresse textile 25 sous la forme d'un ruban, par exemple, est enrobée du matériau cellulaire 13. Cette tresse textile 25 est déroulée en continu à partir d'une bobine 27. Une fois enrobée du matériau cellulaire 13, la tresse textile 25 traverse de part en part un conduit 29 de forme conique, dont la section augmente dans la direction de déroulement de la tresse textile 25. Au cours de son passage dans ce conduit 29, le matériau cellulaire 13 s'expanse de manière naturelle et adhère à la tresse textile 25. La vitesse de déroulement de la tresse textile 25, la longueur du conduit 29 et le dosage du matériau cellulaire 13 sont calculés de manière à ce que l'expansion du matériau cellulaire 13 soit terminée à la sortie du conduit 29.

Ensuite, la tresse textile 25 passe au travers d'une filière 21 d'une tête d'extrusion pour former une enveloppe 12 autour du matériau cellulaire expansé 13. Le matériau de cette enveloppe 12 tel que du caoutchouc compact ou cellulaire sous forme pâteuse, est introduit dans la filière 21, dont le profil est défini en fonction de la forme et des dimensions de l'enveloppe 12 que l'on désire obtenir. La tresse textile 25 est par exemple tirée en continu à partir d'une chenille de tirage 30 située en aval de la filière d'extrusion 21. L'ensemble est ensuite vulcanisé, d'une façon connue en soi.

Ainsi, selon les procédés décrits précédemment, on obtient un élément tubulaire 5 avantageusement rempli d'un matériau cellulaire qui forme un nid d'abeille, par exemple à cellules ouvertes, et dont la densité et la rémanence sont telles que l'on facilite les prises de rayon de cet élément tubulaire 5 et que l'on améliore les propriétés phoniques du dispositif d'étanchéité.

## Revendications

1. Dispositif d'étanchéité comportant un élément de fixation au bâti ou à la caisse d'un véhicule automobile et un élément tubulaire élastiquement déformable avec lequel est propre à coopérer une partie mobile du véhicule, comme une porte, un capot de moteur ou de coffre, ou analogue, caractérisé en ce que l'élément tubulaire (5) comprend une enveloppe externe (12), dont le volume intérieur est au moins partiellement rempli d'un matériau cellulaire (13) de faible densité et ayant une bonne rémanence.

2. Dispositif selon la revendication 1, caractérisé en ce que le volume intérieur de l'enveloppe (12) de l'élément tubulaire (5) est complètement rempli dudit matériau cellulaire (13).

3. Dispositif selon la revendication 1 ou 2, caractérisé en ce que ledit matériau cellulaire est à base de polyuréthane, par exemple.

4. Dispositif selon l'une quelconque des revendications 1 à 3, caractérisé en ce que l'enveloppe (12) de l'élément tubulaire (5) est constituée en un matériau compact, tel que du caoutchouc.

5. Dispositif selon l'une quelconque des revendications 1 à 3, caractérisé en ce que l'enveloppe (12) de l'élément tubulaire (5) est constituée en un matériau souple, tel que du caoutchouc cellulaire.

6. Procédé de fabrication d'un dispositif d'étanchéité tel que défini par l'une quelconque des revendications précédentes, selon lequel l'enveloppe de l'élément tubulaire est fabriquée par extrusion, caractérisé en ce qu'il consiste à injecter le matériau cellulaire à l'intérieur de l'enveloppe de l'élément tubulaire au cours de l'extrusion de ce dernier, de manière à ce que l'expansion du matériau cellulaire se produise à l'intérieur de l'enveloppe pour former l'élément tubulaire élastiquement déformable du dispositif d'étanchéité.

7. Procédé de fabrication d'un dispositif d'étanchéité tel que défini par l'une quelconque des revendications 1 à 5, selon lequel l'enveloppe de l'élément tubulaire est fabriquée par extrusion, caractérisé en ce qu'il consiste à enrober une tresse textile d'un matériau cellulaire, à tirer cette tresse au travers d'un conduit de forme conique pour permettre au matériau cellulaire de s'expanser, et à fabriquer l'enveloppe de l'élément tubulaire du dispositif d'étanchéité par extrusion autour du matériau cellulaire expansé à la sortie du conduit.
